# EUROPEAN PATENT APPLICATION

(11) **EP 1 429 478 A2**
(43) Date of publication of application: **16.06.2004**
(21) Application number: 03028642.1
(22) Date of filing: 15.12.2003
(51) Int. Cl.: H04B 10/155

(54) **Directly modulated laser diode for vestigial sideband modulation**

(30) Priority: 14.12.2002 KR 2002080025
(71) Applicant: Samsung Electronics Co., Ltd., Suwon-city, Gyeonggi-do (KR)
(72) Inventor: Lee, Han-Lim, Samsung Electronics Co., Ltd., Suwon-si, Gyeonggi-do (KR); Oh, Yun-Je, Samsung Electronics Co., Ltd., Suwon-si, Gyeonggi-do (KR); Hwang, Seong-Taek, Samsung Electronics Co., Ltd., Suwon-si, Gyeonggi-do (KR); Jeong, Ji-Chai, Samsung Electronics Co., Ltd., Suwon-si, Gyeonggi-do (KR); Kim, Yong-Gyoo, Samsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a directly modulated distributed feedback laser diode optical transmitter using a vestigial side band modulation. The optical transmitter comprises an electric signal generator converting inputted signals into electric signals; a distributed feedback laser diode converting the electric signals into optical signals; and an optical tunable filter for setting a central wavelength configured to filter the optical signals using a central wavelength, perform a vestigial side band modulation of the optical signals by degenerating a determined band of the optical signals using central wavelength, and reduce the band width of the optical fibers , thereby improving the extinction ratio. By applying an optical tunable filter of a vestigial side band modulation type to an optical transmitter using a directly modulated distributed feedback laser diode, the band width of optical signals for a transmission can be reduced.

## Description

### BACKGROUND OF THE INVENTION

### 1. Field of the Invention

The present invention relates to an optical transmitter, and more particularly to an optical transmitter converting electric signals into optical signals using laser diodes.

### 2. Description of the Related Art

In general, optical fibers are characterized by high output power, an excellent spectrum band and high power efficiency, etc. In order to meet such characteristics over a wide range, a distributed feedback laser is commonly used. An optical transmitter generating optical signals by feeding electric signals into a distributed feedback laser diode is called a "directly modulated distributed feedback laser diode optical transmitter."

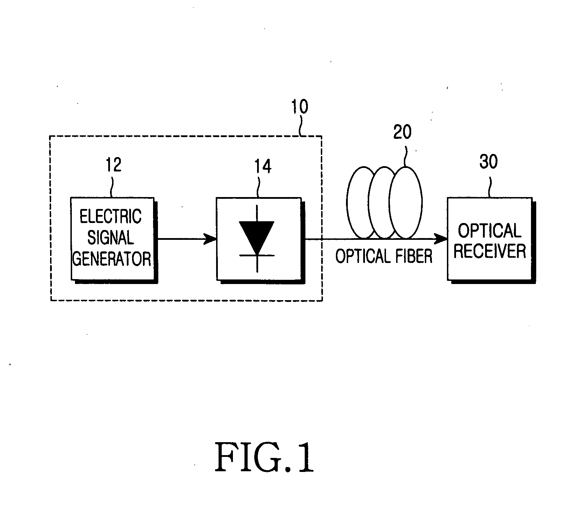

FIG. 1 shows a conventional directly modulated distributed feedback laser diode optical transmitter and a transmission link applying it. As shown, directly modulated distributed feedback laser diode optical transmitter 10 comprises an electrical signal generator 12 and a distributed feedback laser diode 14. Electric signal generator 12 converts received transmission signals into electric signals and outputs them to distributed feedback laser diode 14. Distributed feedback laser diode 14 converts the electric signals into optical signals.

The optical signals from directly modulated distributed feedback laser diode optical transmitter 10 are transferred to an optical receiver 30 via standard single-mode fibers 20. Optical receiver 30 converts the transferred optical signals into electric signals.

However, when a directly modulated distributed feedback laser diode 14 is used in an optical transmitter to convert electrical signals into optical signals without an optical modulator, as in the prior art, the carrier density in distributed feedback laser diode 14 is changed according to the inputted electric signals. Such a change in the carrier density affects the refractive index. As a result, frequency modulation occurs, and therefore the band width of optical signals becomes larger. Optical signals with a larger band width suffer more severe signal distortion, due to dispersion during transmission via optical fibers 20, as compared with those with a smaller band width. Such signal distortion increases the penalty to dispersion optical power after transmission. Consequently, optical signals with a large band width have a limited transmission distance.

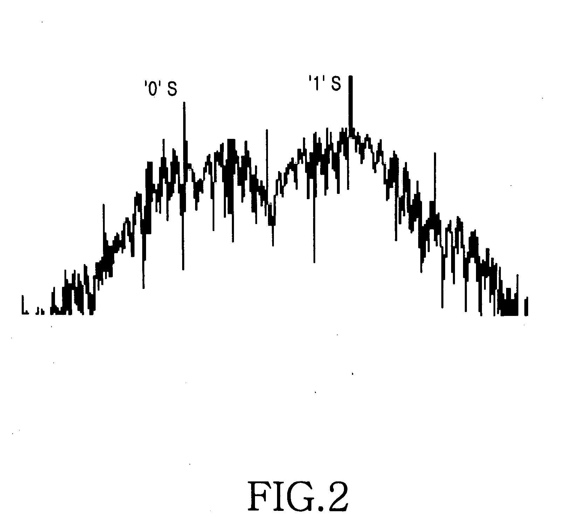

FIG. 2 shows the optical spectrum of directly modulated distributed feedback laser diode optical transmitter 10 of FIG. 1. As shown, there exists a peak ('1'S) corresponding to the '1' level and a peak ('0'S) corresponding to the '0' level. Furthermore, the high level of power is maintained at the side band.

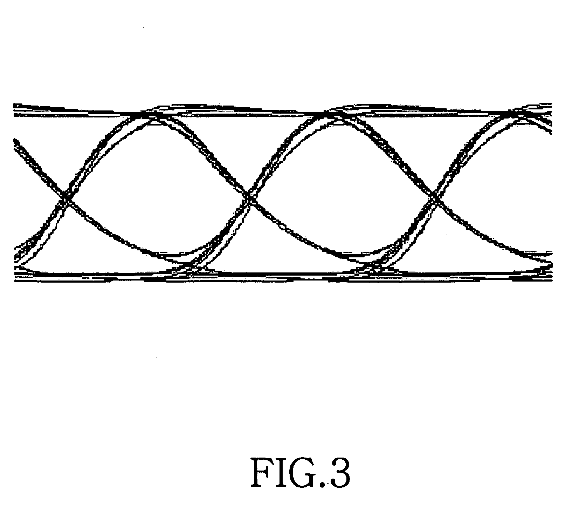

FIG. 3 shows an eye-diagram of directly modulated distributed feedback laser diode optical transmitter 10 of FIG. 1. As shown in the eye-diagram, with optical transmitter 10 using directly modulated distributed feedback laser diode 14, the average output of the '0' level is high. Therefore, optical signals with a small extinction ratio are outputted. As used herein, an "Extinction ratio" is an exponential ratio taken as a logarithmic value between the outputted '0' level and '1' level. A low extinction ratio causes a problem of decreasing the sensitivity of optical receiver 30 before transmission. Thus, a penalty is caused to the optical power in the system.

In order to increase the extinction ratio of directly modulated distributed feedback laser diode optical transmitter 10, the '0' level current must be applied at the threshold current portion. However, this approach incurs has limitations, in that not only a large peak occurs at the '1' level due to a relaxation oscillation, but also a more severe frequency modulation occurs owing to the large peak. As a result, transmission characteristics deteriorate.

In summary, conventional optical transmitter 10 using directly modulated distributed feedback laser diode 14 is not suitable for a link configuration for an optical transmission. This is due to its (1) increased penalty to the optical power resulting from a small extinction ratio, and (2) the increased penalty to the dispersion of optical power due to a frequency modulation decrease in the sensitivity before and after a transmission.

### SUMMARY OF THE INVENTION

Accordingly, the present invention reduces or overcomes the above-mentioned problems occurring in the prior art.

One aspect of the present invention is to provide an optical transmitter using a directly modulated distributed feedback laser diode for reducing the penalty to dispersion optical power occurring when optical signals are transmitted.

Another aspect of the present invention is to provide an optical transmitter using a directly modulated distributed feedback laser diode for improving the sensitivity before a transmission by improving the extinction ratio, thereby reducing the transmission band width of optical signals.

In accordance with the principles of the present invention an optical transmitter is provided for converting inputted signals into optical signals and transmitting the optical signals to an outer device connected to optical fibers. The optical transmitter includes an electric signal generator converting inputted signals into electric signals, a distributed feedback laser diode converting the electric signals into optical signals and an optical tunable filter configured to filter the optical signals using a central wavelength, perform a vestigial side band modulation of the optical signals by degenerating a determined band of the optical signals using central wavelength, and reduce the band width of the optical fibers, thereby improving the extinction ratio. Importantly, the power of the optical signals, which have passed through the optical tunable filter, is reduced at the side band, and thereby the band width of the optical signals is reduced. Furthermore, when the optical tunable filter sets the central wavelength to a peak portion (for example, corresponding to the '1' level) of the optical signals, the power of a first logical level (e.g., the '1' level) of the optical signals which have passed through the optical tunable filter is not reduced but the power of a second logical level (e.g., the '0' level) thereof is reduced. The central wavelength set by the optical tunable filter is set to be larger than the central wavelength of the optical signals by 0.1 nm. This performs the vestigial side band modulation of the optical signals.

According to the present invention, by applying an optical tunable filter of a vestigial side band modulation type to an optical transmitter using a directly modulated distributed feedback laser diode, the band width of optical signals for a transmission can be reduced. By means of the optical tunable filter of the present invention, one side band is degenerated and the band width of the outputted optical signals is reduced, and therefore the extinction ratio is improved. Accordingly, the sensitivity of optical signals before a transmission is improved. Furthermore, the reduced band width of optical signals decreases the penalty to dispersion optical power occurring during the transmission of optical signals.

### BRIEF DESCRIPTION OF THE DRAWINGS

The present invention will be more apparent from the following detailed description taken in conjunction with the accompanying drawings, in which:
FIG. 1 shows a conventional directly modulated distributed feedback laser diode optical transmitter and a transmission link applying it;
FIG. 2 shows the optical spectrum of the directly modulated distributed feedback laser diode optical transmitter of FIG. 1;
FIG. 3 shows an eye-diagram of the directly modulated distributed feedback laser diode optical transmitter of FIG. 1;
FIG. 4 shows a directly modulated distributed feedback laser diode optical transmitter of a vestigial side band modulation type and a transmission link applying it, according to a preferred embodiment of the present invention;
FIG. 5 shows the optical spectrum of the directly modulated distributed feedback laser diode optical transmitter of a vestigial side band modulation type of FIG. 4;
FIG. 6 shows an eye-diagram of the directly modulated distributed feedback laser diode optical transmitter of a vestigial side band modulation type of FIG. 4; and
FIG. 7 is a graph showing a performance comparison of the directly modulated distributed feedback laser diode optical transmitter of a vestigial side band modulation type according to the present invention vs. a conventional directly modulated distributed feedback laser diode optical transmitter.

### DETAILED DESCRIPTION OF THE PREFERRED EMBODIMENT

In the following description of the present invention, for purposes of explanation rather than limitation, specific details are set forth such as the particular architecture, interfaces, techniques, etc., in order to provide a thorough understanding of the present invention. However, it will be apparent to those skilled in the art that the present invention may be practiced in other embodiments that depart from these specific details. Moreover, it will be recognized that certain aspects of the figures are simplified for explanation purposes and that the full system environment for the invention will comprise many known functions and configurations all of which need not be shown here. In the drawings, the same or similar elements are denoted by the same reference numerals even though they are depicted in different drawings.

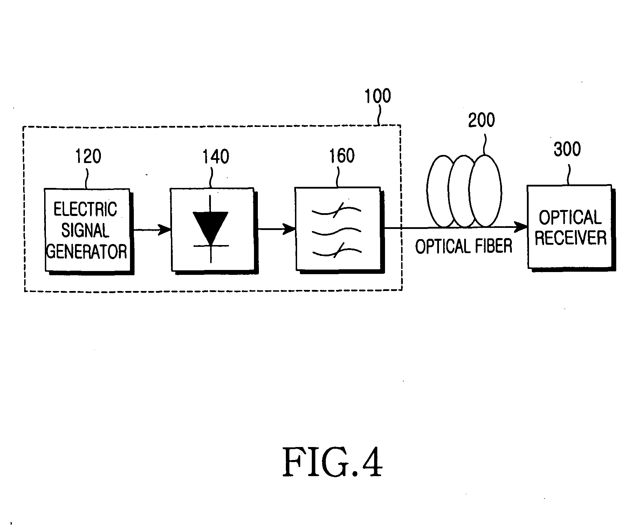

FIG. 4 shows a directly modulated distributed feedback laser diode optical transmitter of a vestigial side band modulation type and a transmission link applying it according to a preferred embodiment of the present invention. As shown, directly modulated distributed feedback laser diode optical transmitter 100 comprises an electric signal generator 120, a distributed feedback laser diode 140 and an optical tunable filter 160. The electric signal generator 120 converts inputted transmission signals into electric signals and outputs the converted electric signals to distributed feedback laser diode 140. Distributed feedback laser diode 140 converts the outputted electric signals into optical signals.

Optical tunable filter 160 is configured to set a central wavelength for the filtration of the optical signals different from the central wavelength of the inputted optical signals. Then, optical tunable filter 160 degenerates a determined band of the optical signals converted and inputted by distributed feedback laser diode 140 by means of the set central wavelength and reduces the band width of the inputted optical fibers. Thus, the extinction ratio is improved. In this embodiment, optical tunable filter 160 sets the central wavelength so that one side band of the inputted optical signals is degenerated relative to the optical signals and then degenerates one side band of the optical signals converted and inputted by distributed feedback laser diode 140 according to the set central wavelength. As a result, the band width of the optical fibers is reduced and the extinction ratio is improved.

Using optical tunable filter 160, greatly reduces the power at the side band of optical signals that has passed through optical tunable filter 160. Therefore, it reduces the band width of the optical signals. Furthermore, when optical tunable filter 160 sets the central wavelength near the peak portion corresponding to the '1' level of the optical signals, the power of the '1' level of the optical signals is not reduced but the power of the '0' level thereof is reduced. Accordingly, the extinction ratio of the optical signals is improved.

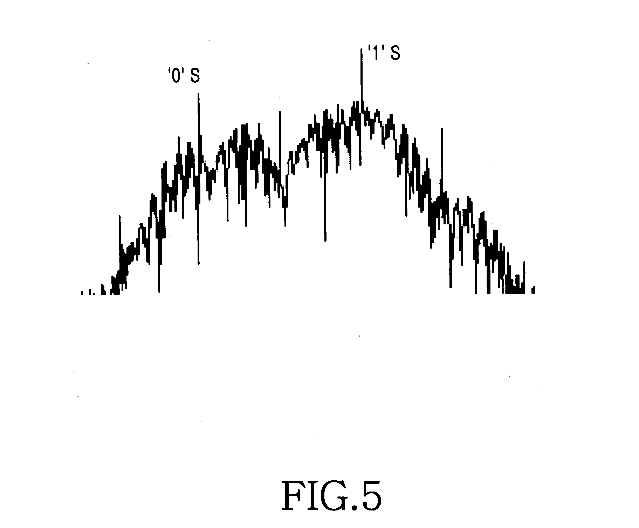

FIG. 5 shows the optical spectrum of directly modulated distributed feedback laser diode optical transmitter 100 of a vestigial side band modulation type of FIG. 4. More specifically, illustrated is the optical spectrum outputted by optical tunable filter 160 when the central wavelength (0.3 nm, band width: 3 dB) of optical tunable filter 160 is set to be larger than that of the inputted optical signals by 0.1 nm. This value has been confirmed by experiments to be suitable for minimizing the fluctuation of wave shapes and improving the value of Bit Error Rate (BER). As is clear from the drawing, when considering the magnitudes of the peak ('0'S) corresponding to the '0' level and the peak ('1'S) corresponding to the '1' level, the former has become smaller than that of FIG. 2. As a result, the band width of outputted optical signals is reduced.

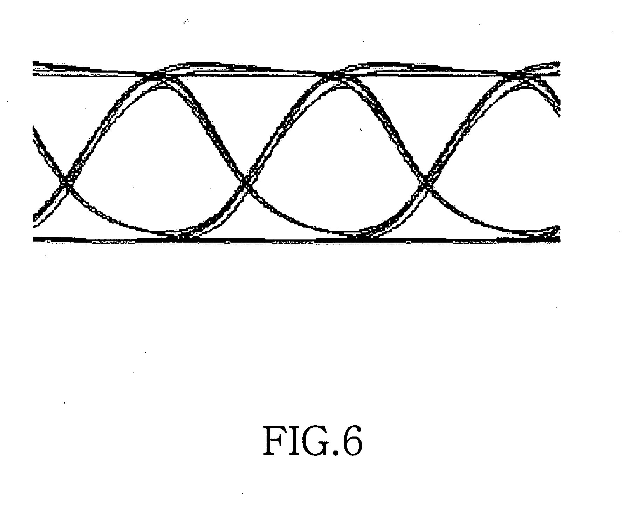

FIG. 6 shows an eye-diagram of directly modulated distributed feedback laser diode optical transmitter 100 of a vestigial side band modulation type of FIG. 4. As shown, the average output of the '0' level is reduced and the extinction ratio is improved, compared with FIG. 3.

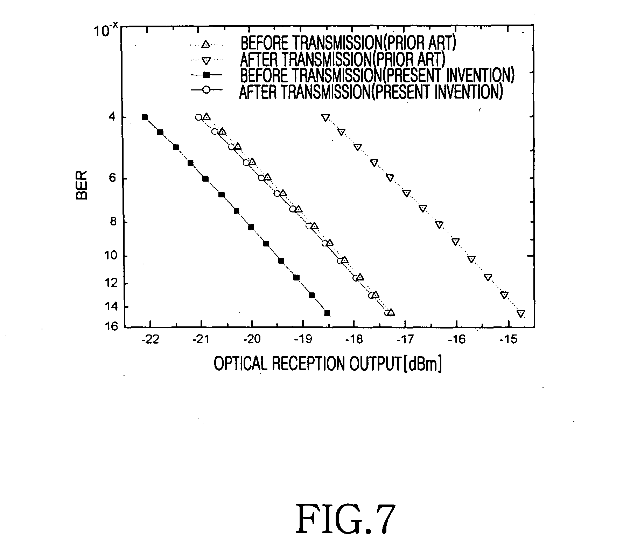

FIG. 7 is a graph showing a performance comparison of a directly modulated distributed feedback laser diode optical transmitter of a vestigial side band modulation type, according to the present invention vs. a conventional directly modulated distributed feedback laser diode optical transmitter, as mentioned above with reference to FIG. 1. As shown, the conventional optical transmitter sensitivity before a transmission is -17.8 dBm at 10⁻¹² BER and, when the total amount of dispersion is 170 ps/nm, the sensitivity becomes -15.3 dBm at 10⁻¹² BER. Accordingly, the penalty to dispersion power is 2.5 dB. The value of 170 ps/nm corresponds to the total amount of dispersion in the case of a transmission of about 10 km at a wavelength of 1550 nm with standard single-mode optical fibers. Since the allowable limit of the penalty to dispersion power is 2 dB in a common 10 Gb/s transmission link, the conventional optical transmitter is not suitable for the configuration of an optical transmission link using standard single-mode optical fibers with a total amount of dispersion of 170 ps/nm or more.

However, as shown in FIG. 7, the optical transmitter according to the present invention sensitivity before a transmission is -19 dBm at 10⁻¹² BER, improved by 1.2 dB compared with the conventional optical transmitter due to the improvement of the extinction ratio. Moreover, after a transmission of 10 km through standard single-mode optical fibers, the sensitivity is -17.9 dBm at 10⁻¹² BER. Thus, the penalty to dispersion power is reduced to 1.1 dB. Consequently, the directly modulated distributed feedback laser diode optical transmitter of a vestigial side band modulation type can be used efficiently in the configuration of an optical transmission link with a total amount of dispersion of 170 ps/nm or more.

According to the present invention, by applying an optical tunable filter of a vestigial side band modulation type to an optical transmitter using a directly modulated distributed feedback laser diode, the band width of optical signals for a transmission can be reduced.

Furthermore, by means of the optical tunable filter of a vestigial side band modulation type, one side band is degenerated and the band width of outputted optical signals is reduced. Thus, the extinction ratio is improved. Accordingly, the sensitivity of optical signals before a transmission is improved, and reduced band width of optical signals decreases the penalty to dispersion optical power occurring during the transmission of optical signals.

While the invention has been shown and described with reference to certain preferred embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. An optical transmitter (100) for converting signals into optical signals and transmitting the optical signals using optical fibers, the optical transmitter (100) comprising:
an electric signal generator (120) to convert a received signal into an electric signal;
a distributed feedback laser diode (140) to convert the electric signal into an optical signal; and
an optical tunable filter (160) configured to filter the optical signal using a central wavelength;
to perform a vestigial side band modulation of the optical signal by degenerating a determined band of the optical signal using central wavelength; and
to reduce the band width of the optical fibers.

2. The optical transmitter (100) according to claim 1, wherein the optical transmitter (100) is configured to transmit the vestigial side band modulated optical signal using the optical fibers.

3. The optical transmitter (100) according to claim 1 or 2, wherein the optical tunable filter (160) is further configured to enable setting the central wavelength.

4. The optical transmitter (100) according to claim 3, wherein the optical tunable filter (160) is configured such that the central wavelength is set in a way that the power of the optical signals which have passed through the optical tunable filter (160) is reduced at the side band.

5. The optical transmitter (100) according to claim 3 or 4, wherein the optical tunable filter (160) is configured such that when the optical tunable filter (160) sets the central wavelength to a peak portion of the optical signals, the power of a first logical level of the optical signals which have passed through the optical tunable filter (160) is not reduced, but the power of a second logical level thereof is reduced.

6. The optical transmitter (100) according to claim 5, wherein the first logical level is a logical one level of the optical signals.

7. The optical transmitter (100) according to claim 6, wherein the second logical level is a logical zero level of the optical signals.

8. The optical transmitter (100) according to claim 5, wherein the optical tunable filter (160) is configured such that the central wavelength set by the optical tunable filter (160) is substantially larger than the central wavelength of the optical signals by 0.1 nm.
